# EUROPEAN PATENT APPLICATION

(11) **EP 4 219 214 A1**
(43) Date of publication of application: **02.08.2023**
(21) Application number: 23153219.3
(22) Date of filing: 25.01.2023
(51) Int. Cl.: B60L 3/00, B60L 3/04, H01M 10/48

(54) **ELECTRIC KART BATTERY WITH E-PAPER SAFETY STATUS DISPLAY**

(30) Priority: 28.01.2022 US 202263304292 P
(71) Applicant: BRP-Rotax GmbH & Co. KG, 4623 Gunskirchen (AT)
(72) Inventor: WOLFSEGGER, Simon, 4661 Roitham am Traunfall (AT)
(74) Representative: Murgitroyd & Company

(57) **Abstract**

A safety status display system for an electric vehicle high-voltage (HV) battery is presented. The system contains a battery management module coupled to the HV battery to acquire status information and configured to disconnect the HV battery in the event of a faulty battery condition or a detected electrical insulation defect. An insulation monitoring module installed between the HV battery and the electric vehicle and configured to detect an electrical insulation defect between the HV battery and the frame portion as well as communicate the detected electrical insulation defect to the battery management module. An e-paper display unit coupled to the battery management module to receive the HV battery status information and configured to render a bistable display of the HV battery status information a detected faulty battery condition or electrical insulation defect.

## Description

### FIELD OF TECHNOLOGY

The technology presented herein relates to batteries for powering electric vehicles and, in particular, to electric vehicle batteries configured with status and safety information rendered by e-paper displays.

### BACKGROUND

The use and configuration of batteries for electric vehicles is well known. For example, U.S. Patent Pub. No. 2013/0025950A1 (published on January 31, 2013), describes an electric kart with one or more lightweight, quick-change batteries or battery packs, including Lithium-Ion based batteries/battery packs mounted on the kart frame. The kart body has battery pack access openings to provide easy access to remove and replace battery packs during racing operations. The batteries are easily removed and replaced so that a particular kart can be powered-up in a matter of seconds. The removed batteries are placed on a charger to be recharged in order to be placed back into service relatively quickly.

However, conventional electric kart battery control configurations do exhibit some drawbacks. In particular, electric karts employ a combination of high voltage (HV) battery sets for normal operations. Such HV battery sets may produce an output voltage of 300-400 VDC. As a safety measure, the use of such HV batteries require the implementation of an Insulation Monitoring Device (IMD). The IMD is configured to detect any defects in the insulation or isolation between the HV battery electrical system and the kart chassis. If the IMD detects an insulation defect, the HV battery is disconnected and an appropriate warning is displayed, *e.g.* a warning light. In some jurisdictions, it is also required that the warning light indicating the detection of an IMD defect be displayed for a certain amount of time, such as 15 minutes, for example. The warning light display is typically powered by an auxiliary (*e.g*., 12 V) battery that is energized by the HV battery during normal operations.

In cases where the HV battery is disconnected due to a detected IMD defect, the auxiliary battery has about a 15-20 minute charge expectancy to maintain the warning light display. Therefore, in the event of an race incident, in which rescue efforts take longer than 20 minutes, there exists the possibility that the warning light display is turned off due to the auxiliary battery being discharged. As such, the driver and/or responders may be unaware of the HV insulation defect detected by the IMD and the potential voltage hazard.

### SUMMARY

An object of the present disclosure is to provide a safety status display system for a high-voltage (HV) battery used in an electric vehicle. The HV battery safety status display system includes a battery management module that is electrically and communicatively coupled to the HV battery and configured to acquire status information of the HV battery as well as configured to disconnect the HV battery in the event of a faulty battery condition or a detected electrical insulation defect.

The HV battery safety status display system also includes an insulation monitoring module installed between the HV battery and a frame portion of the electric vehicle in which the insulation monitoring module is electrically and communicatively coupled to the battery management module and is configured to detect an electrical insulation defect between the HV battery and the frame portion. Upon detecting an electrical insulation defect, the insulation monitoring module reports the detected electrical insulation defect to the battery management module.

The HV battery safety status display system further includes an e-paper display unit comprising a flexible, thin, electronic label-type structure that is affixed to the HV battery, the e-paper display unit electrically and communicatively coupled to the battery management module to receive the HV battery status information and configured to render a bistable display of the HV battery status information.

In view of the configuration of the HV battery safety status display system, in the event of a detected faulty battery condition or an electrical insulation defect detected by the insulation monitoring module in which the HV battery is disconnected by the battery management module, the e-paper display unit maintains the display of a most current HV battery status information including an indication of a detected faulty battery condition or electrical insulation defect.

The exemplary implementations described by this disclosure are intended to aid the reader in understanding the principles and relevant concepts of the present technology. In no way, however, are the specifically described implementations intended to limit the scope of the present technology.

### BRIEF DESCRIPTION OF THE DRAWINGS

The drawings included herewith are for illustrating various implementations of articles, products, methods, and apparatuses described in the present specification. The drawings could not be to scale. Some features shown in the drawings could be exaggerated, or scaled down, relative to their possible "life" size(s), in order to make these features clearly visible in the drawings.

In the drawings:
FIG. 1A is a top plan view of an electric kart, according to one implementation;
FIG. 1B is a perspective view taken from a front, right side of the electric kart of FIG. 1A;
FIG. 1C is a perspective view taken from a front, left side of a left-side battery of the electric kart of FIGs. 1A and 1B;
FIG. 2A is a high-level functional block diagram of an electric kart battery safety status system, according to one implementation; and
FIG. 2B is a detailed functional block diagram of an electric kart battery safety status system.

### DETAILED DESCRIPTION

The present technology will be described herein with respect to an electric kart. It is contemplated that at least some aspects of the present technology could be used in other small electric vehicles such as, electric bicycles, for example.

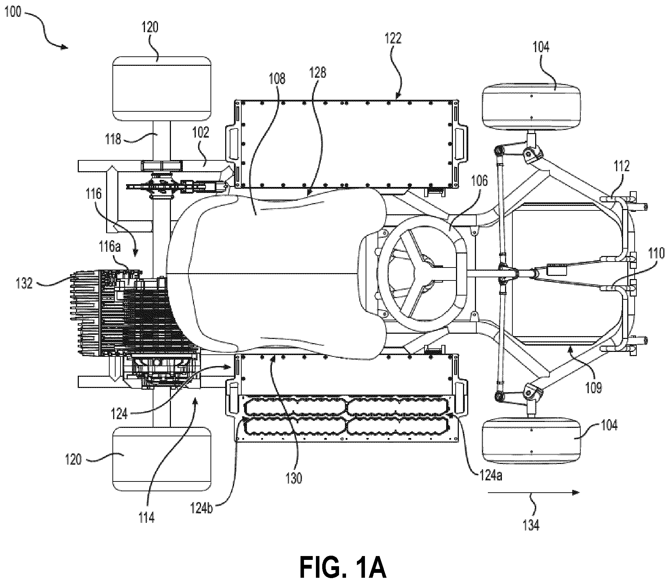

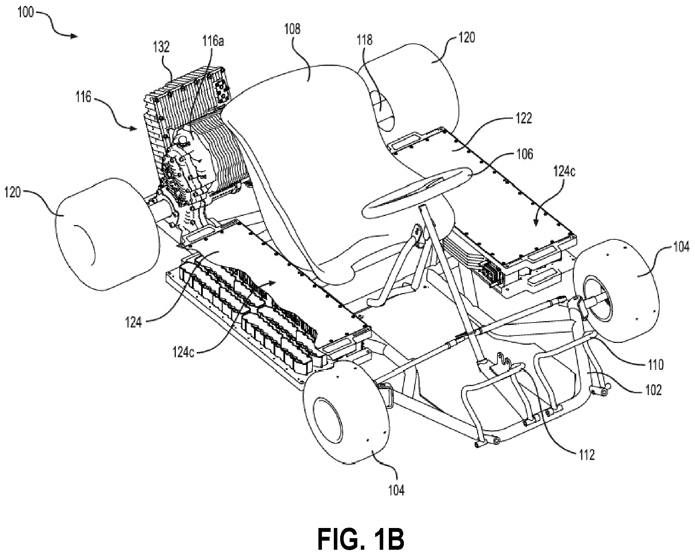

FIGs. 1A and 1B provides a top plan view and perspective view, respectively, of the general configuration of an electric kart vehicle **100,** in accordance with one implementation. Such vehicles may be referred to as "go-karts" or "e-karts." It should be understood that electric kart **100** could have a configuration other than the one shown and described below.

As depicted, electric kart **100** includes a frame **102** comprising, at least in part, a tubular structure, also known as a frame **102.** The frame **102** is made from a plurality of hollow cylindrical steel members and steel brackets that are welded to each other. It is contemplated that at least some of the hollow cylindrical members could be replaced by other types of members such as, for example, solid cylindrical members, hollow tubes having a cross-section other than circular, and beams, *etc.*

It is also contemplated that the members and brackets could be made of another type of metal, such as, for example, aluminum and that at least some of the members and/or brackets could be made of a non-metallic material, such as, for example, composite materials or plastics. It is further contemplated that at least some of the members and brackets could be joined to each other by means other than welding, such as, for example by fastening and bonding and that two or more of the members and brackets described below could be cast or otherwise formed as a single component.

As shown in FIGs. 1A, 1B, a pair of front wheels **104** is rotatably connected to the frame **102.** A steering wheel **106** is operatively connected to the front wheels **104** for steering the electric kart **100.** A driver's seat **108** is connected to the frame **102** rearward of the steering wheel **106.** In a front portion **108** of the electric kart **100,** in front of the driver seat **108,** there is an accelerator pedal **110** and a brake pedal **112.**

Disposed in a rear portion **114** of the frame **102,** rearward of the driver seat **108,** is a drive assembly **116** for driving the electric kart **100.** The drive assembly **116** includes an electric motor **116a** that is positioned rearward of the driver seat **108.** In one implementation, electric motor **116a** comprises an AC permanent magnet synchronous motor (PMSM). Accordingly, electric kart **100** includes a power inverter **132,** electrically coupled between the battery packs **122, 124** and electric motor **116a,** to convert the VDC values provided by the battery packs **122, 124** into VAC values required by the AC PMSM electric motor **116a.** It is contemplated that electric motor **116a** could also be embodied as a DC motor, in which no power inverter would be required to provide the necessary VDC power supply to the DC motor. It is contemplated that in some embodiments, the power inverter **132** could be disposed in front of the driver's seat **108.**

A rear-wheel drive shaft **118** extends through and is supported by the drive assembly **116.** A pair of rear wheels **120** is operatively connected to the frame **102** and is driven by the rear-wheel drive shaft **118.** The electric motor **116a** is operatively connected to the rear-wheel drive shaft **118** to drive the rear wheels **120.** It is contemplated that the electric kart **100** could include a twin-motor drive system having two drive assemblies **116** behind and on either side of the driver's seat **108.** In such an implementation, two rear-wheel drive shafts **118** would be installed on both sides of the electric kart **100,** in the two drive assemblies **116.**

In the implementation depicted by FIGs. 1A, 1B, electric kart **100** employs two electric kart battery packs **122, 124,** in which one battery pack is disposed on either lateral side of the driver's seat **108** and each of the battery packs **122, 124** is configured to supply electric power to the electric motor **116a.** Each of the two electric kart battery packs **122, 124** incorporate a battery management system (BMS) module **164** and a plurality of battery cells **146.** It is contemplated that each of the electric kart battery packs **122, 124** could be mounted to different locations of the frame **102** or that a single battery pack **122** could be mounted forward of the driver's seat.

The BMS **164** operates to balance the voltage of the battery cells **146,** control recharging of the battery cells **146,** control the operating temperature of the battery cells **146,** and shut off (*i.e.,* disconnect) the connectivity between the battery cells **146** and electric kart **100** in case of detected faulty battery conditions, such as, for example, overloading, overheating, accelerated degradation, thermal runaway, *etc.* In addition, BMS 164 operates to collect battery status information, such as, for example, state-of-charge (SOC), state-of-health (SOH), state-of-function (SOF), battery temperature, battery capacity, number of charge duty cycles, *etc.* The BMS **164** forwards the battery status information to a display panel (not shown) disposed in the cockpit area to facilitate driver viewing. The BMS **164** is capable of operating in "active mode", which enables it to function and respond in real-time, or in "dormant mode", which enables it to conserve battery power and "wakes up" at specified intervals to perform status checks and report the same to a display.

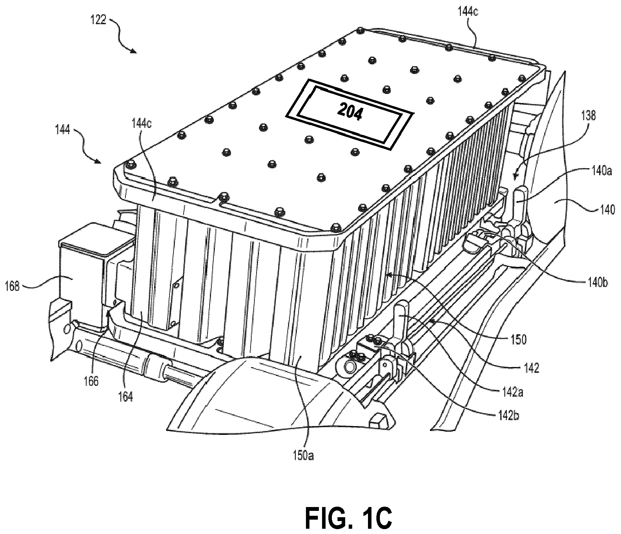

Turning to FIG. 1C, which provides a perspective view of a left-side battery, the BMS **164** includes a quick-connect electrical connector **166** that is removably electrically mated with a matching quick-connect electrical connector **168** positioned on the frame **102** of electric kart **100.** The matching quick-connect electrical connector **168** is electrically connected to the electric motor **116a.** It is contemplated that the battery management module **164** may be electrically connected to the electric motor **116a** via any other suitable electrical connection.

The cells **146** of each of the electric kart battery packs **122, 124** are configured to be rechargeable Li-ion batteries and are electrically interconnected in a combination of parallel and series electrical connections to provide battery packs **122, 124** with an output voltage of nominally 300-400 VDC. It is contemplated that the battery cells could manifest any other suitable battery type, such as, for example, gel cell battery, nickel-metal hydride battery, *etc.* capable of providing the necessary voltage and amperage as well as also be electrically interconnected in any suitable manner to provide a different output voltage/amperage to suit the operational requirements of electric motor **116a.**

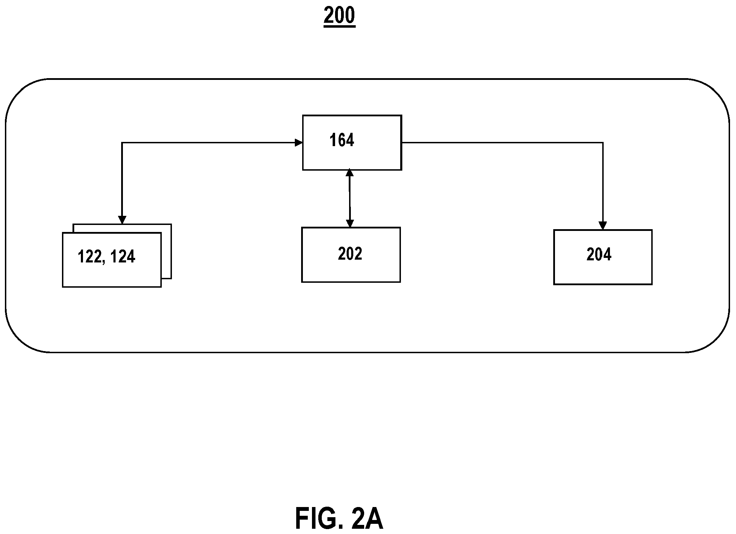

Given this overview of electric kart **100** and electric kart battery packs **122, 124,** attention is drawn to FIG. 2A depicting a high-level functional block diagram of an electric kart battery safety status system **200,** in accordance with one implementation. As shown, electric kart battery safety status system **200** comprises electric kart battery packs **122, 124,** BMS **164,** IMD **202,** and e-paper display unit **204.**

As discussed above, BMS **164** is electrically and communicatively coupled to electric kart battery packs **122, 124** to execute various HV battery maintenance procedures (*e.g*., voltage balancing, recharging control, temperature control, *etc.*) as well as disconnect the HV battery supply connectivity in case of detected faulty battery conditions (*e.g*., overloading, overheating, accelerated degradation, thermal runaway, *etc.*)*.* In addition, BMS **164** is configured to collect and furnish HV battery status information, such as, SOC, SOH, SOF, *etc.* to a cockpit display (not shown) for convenient viewing. In some embodiments, the cockpit display is a steering wheel-mounted display.

As also noted above, for safety reasons, an electric kart **100** utilizing HV batteries is required to incorporate IMD **202** configured to detect insulation defects between the HV battery electrical system and the electric kart chassis **102** and electrically communicate the defective insulation condition to the BMS **164** for disconnection of battery packs **122, 124.** In some jurisdictions, IMD **202** is also required to display the detection of an IMD defect for a certain amount of time (*e.g.,* 15 min.).

The IMD **202** is typically installed between the HV conductors and the electric kart frame 102. Generally, in operation, the IMD **202** injects a small measuring current (on the order of *µ*As) between the HV conductors and the frame **102** to generate a measuring voltage and calculate a measuring resistance/voltage (Ω/V) ratio. If the resistance/voltage ratio fall below a threshold (e.g., 100 Ω/V), an insulation fault is determined to exist between the HV conductors and the frame **102.** By way of example, for HV conductors outputting 300 VDC, a resistance of 30kQ or less would indicate an insulation fault and for HV conductors outputting 400 VDC, a resistance of 40kQ or less would indicate an insulation fault. In such cases, the IMD **202** forwards a signal indicating the insulation fault condition information to the BMS **164.** In turn, the BMS **164** forwards a command signal to power contactor units to disconnect the HV battery supply and provides the detected insulation fault condition information to e-paper display unit **204** for display.

Regarding the display of the detected defective insulation condition, as shown in FIG. 2A, electric kart battery safety status system **200** incorporates e-paper display unit **204**. The e-paper display unit **204** is electrically and communicatively coupled to the BMS **164** and configured to provide and maintain the safety status display of the batteries, including the indication of a detected faulty battery condition or electrical insulation defect in addition to the HV battery status information. With regard to the display of detected faulty battery condition or electrical insulation defect, it is contemplated that these indications are differentiated from the HV battery status information by embodying a highlighted or conspicuous display, such as, for example, different contrast or background colors, different message text colors, warning identifiers, *etc.*

In various implementations, the e-paper display unit **204** is based on electrophoretic technologies. Generally, such technologies incorporate an array of microcapsules, typically 40 *µ*m in diameter, that are filled with a fluid containing microscopic particles of different colors and electrical charges that are sandwiched between electrode plates. Upon applying electric fields to the electrode plates, the colored/charged capsules move up or down depending on whether the electric field is positive or negative to provide the surface of the e-paper display to reflect a certain color. Based on signal data controlling the synchrony of applied charges, the reflected colored/charged capsules are capable of rendering text and images on the surface of the e-paper display. These e-paper display renderings are bi-stable meaning that no power is needed to maintain the rendered text/image on the e-paper display until subsequent electric fields are applied to actuate the colored/charged capsules to update/revise the renderings. It is contemplated that other e-paper technologies capable of maintaining bi-stable displays without power, such as gyricon, electrowetting, electro-fluidic, may also be implemented.

In a nonlimiting implementation, e-paper display unit **204** is embodied as flexible, thin, electronic "label-type" structure that may be conspicuously affixed to one or both of the HV battery packs **122, 124,** shown in FIG. 1C. The e-paper display unit **204** receives signals from the BMS **164** conveying HV battery status information via a serial peripheral interface (SPI). The HV battery status information conveyed by the BMS **164** signals may include HV battery status information, such as, SOC, SOH, SOF, *etc.* along with the IMD **202**-provided faulty insulation condition information. The received HV battery status information signals are processed and rendered by e-paper display unit **204** as text/image messages. It will be appreciated that the placement of the e-paper display unit **204** is not limited to the HV battery packs **122, 124,** as it may be affixed to other conspicuous or readily visible areas of electric kart **100.** It will further be appreciated that the HV battery status information may be provided by different communication interfaces, such as, for example, a controller area network (CAN) bus protocol, inter-integrated circuit (I²C) serial bus protocol, or any suitable serial communication interface.

Therefore, in the event of a detected defective insulation condition, in which the IMD **202** furnishes the BMS **164** with such information and the BMS **164** responds by instructing the disconnection HV battery packs **122, 124,** the e-paper display unit **204** affixed to the HV battery packs **122, 124** is capable of maintaining, without any supplied power, the most recent HV system status information indefinitely.

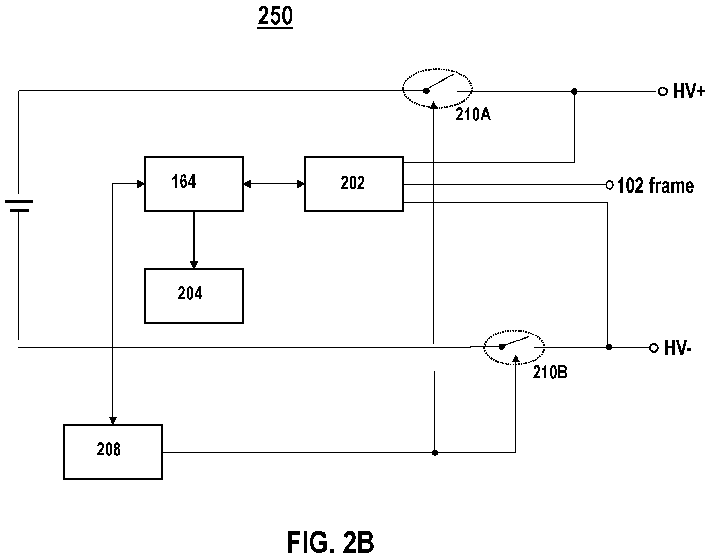

FIG. 2B provides a more detailed functional block diagram of an electric kart battery safety status system **250**, in accordance with one implementation. As shown, the IMD **202** is electrically coupled to the positive and negative terminals of the HV batteries as well as the electric kart frame **102** to detect any faulty insulation conditions. The IMD **202** is also communicatively coupled to BMS **164** to forward any detected faulty insulation conditions.

As noted above, the BMS **164** operates to collect HV battery status information and faulty insulation information for display as well as instruct disconnection of HV battery supply connectivity in the event of case of detected faulty battery conditions or detected faulty insulation conditions. Accordingly, BMS **164** is communicatively coupled to voltage control unit (VCU) **208** that operates to control the connectivity of the HV battery supply in response to BMS **164** command signals. That is, as depicted by FIG. 2B, VCU **208** is electrically coupled to power contactor units **210A, 210B.** It will be appreciated that power contactor units **210A, 210B** may be embodied by a combination of power contactors and associated pre-charge circuits. Accordingly, upon command signals from BMS **164** to disconnect HV battery supply, whether based on detected faulty battery conditions or detected faulty insulation conditions, the power contactor units **210A, 210B** switch to the open state position to break HV connectivity.

As depicted by FIG. 2B, BMS **164** is also communicatively coupled, via an SPI connection (or other serial communication interface, as noted above), to e-paper display unit **204,** which is conspicuously affixed to HV battery packs **122, 124.** The BMS **164** forwards the latest up-to-date HV battery status information (*e.g.,* SOC, SOH, SOF, *etc.*) as well as the IMD **202** detected faulty insulation condition information to the e-paper display unit **204** for display. And, as noted above, in the event of HV battery supply disconnection, the e-paper display unit **204** is capable of maintaining the latest HV battery status information and faulty insulation condition information indefinitely without a power source.

Accordingly, the disclosed electric kart battery control configuration improves upon conventional configurations by maintaining the conspicuous display of the latest HV battery status information and faulty insulation condition information in the absence of power and provide drivers, rescue responders, and service crews with adequate warning of potential hazardous conditions.

Moreover, in addition to the noted improvements over conventional electric vehicle battery control configurations, the disclosed electric kart battery control configuration provides additional benefits. That is, as noted above, BMS **164** is capable of operating in "active mode" or "dormant mode." As such, when electric karts are stored away, for energy conservation reasons, the BMS **164** may be configured to operate in dormant mode with periodic "wake ups" at specified intervals (*e.g*., once per week) to perform status checks and report the results of the checks to the e-paper display unit **204** for conspicuous display.

It will be appreciated that modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A safety status display system (**200**) for a high-voltage, HV, battery (**122**, **124**) used in an electric vehicle (**100**), comprising:
a battery management module (**164**) electrically and communicatively coupled to the HV battery (**122**, **124**) and configured to acquire status information of the HV battery (**122**, **124**), the battery management module (**164**) further configured to disconnect the HV battery (**122**, **124**) in the event of a faulty battery condition or a detected electrical insulation defect;
an insulation monitoring module (**202**) installed between the HV battery (**122**, **124**) and a frame portion of the electric vehicle (**100**), the insulation monitoring module (**202**) electrically and communicatively coupled to the battery management module (**164**) and configured to detect an electrical insulation defect between the HV battery (**122**, **124**) and the frame portion, the insulation monitoring module (**202**) further configured to communicate the detected electrical insulation defect to the battery management module (**164**);
an e-paper display unit (**204**) comprising an electronic label-type structure that is affixed to the HV battery (**122**, **124**), the e-paper display unit (**204**) electrically and communicatively coupled to the battery management module (**164**) to receive the HV battery status information and configured to render a bistable display of the HV battery status information,
wherein, in the event of a detected faulty battery condition or an electrical insulation defect detected by the insulation monitoring module (**202**) in which the HV battery is disconnected by the battery management module (**164**), the e-paper display unit (**204**) maintains the display of a most current HV battery status information including an indication of a detected faulty battery condition or electrical insulation defect.

2. The HV battery safety status display system (**200**) of claim 1, wherein the e-paper display unit (**204**) maintains the display of the most current HV battery status information and the indication of a detected faulty battery condition or electrical insulation defect, until the HV battery (**122**, **124**) is reconnected.

3. The HV battery safety status display system (**200**) of claim 1 or 2, wherein the e-paper display unit (**204**) displaying of a detected faulty battery condition or electrical insulation defect is differentiated from the display of HV battery status information by being displayed in different contrast colors, different background colors, different message text colors, and/or warning identifiers.

4. The HV battery safety status display system (**200**) of anyone of claims 1 to 3, wherein the e-paper display unit (**204**) is electrically and communicatively coupled to the battery management module (**164**) via a serial peripheral interface to receive display instructions.

5. The HV battery safety status display system (**200**) of anyone of claims 1 to 4, further comprising:
the battery management module (**164**) being electrically and communicatively coupled to a voltage control unit (**208**), the voltage control unit (**208**) configured to control the connectivity of the HV battery by communicating with at least one power contactor unit (**210A**, **210B**) connected to conductors of the HV battery and operative to switch between open and closed states;
wherein, in the event of a detected faulty battery condition or electrical insulation defect, the battery management module (**164**) communicates a disconnect command signal to the voltage control unit (**208**) and the voltage control unit (**208**) correspondingly transmits a signal to the at least one power contactor unit (**210A**, **210B**) to switch to an open state.

6. The HV battery safety status display system (**200**) of anyone of claims 1 to 5, wherein the battery management module (**164**) is configurable to operate in active mode to function and respond in real-time and in dormant mode to conserve battery power by being active only at specified intervals,
wherein, during the dormant mode specified intervals, the battery management module (**164**) performs the HV battery status information acquisition and forwards the acquired status information to the e-paper display unit (**204**).

7. The HV battery safety status display system (**200**) of anyone of claims 1 to 5, wherein the HV battery status information acquired by the battery management module (**164**) comprises state-of-charge, state-of-health, state-of-function, battery temperature, battery capacity, and/or number of charge duty cycles.

8. The HV battery safety status display system (**200**) of claim 1, wherein the insulation monitoring module (**202**) determines the existence of an electrical insulation defect if a detected resistance to battery output voltage ratio value is below 100 Ω/V.

9. The HV battery safety status display system (**200**) of claim 1, wherein the HV battery voltage output is nominally in a range of 300-400 VDC and the insulation monitoring module (**202**) determines an electrical insulation defect if a resistance is detected in a range of 30-40 kΩ or less.

10. An electric vehicle (**100**) comprising:
an electric motor (**116a**);
a HV battery (**122**, **124**) configured to supply power to the electric motor (**116a**); and the HV battery safety status display system (**200**) of anyone of claims 1 to 9.

11. The electric vehicle (**100**) of claim 11, wherein the electric vehicle (**100**) comprises an electric kart.
